# EUROPEAN PATENT APPLICATION

(11) **EP 4 332 488 A1**
(43) Date of publication of application: **06.03.2024**
(21) Application number: 23193716.0
(22) Date of filing: 28.08.2023
(51) Int. Cl.: F28D 21/00, F24D 17/00

(54) **HEAT RECOVERY DEVICE FOR USE IN A LIQUID CONDUIT SYSTEM**

(30) Priority: 29.08.2022 NL 2032890
(71) Applicant: GW Leidingtechniek B.V., 5708 HZ Helmond (NL)
(72) Inventor: HOOGERVORST, Robert Theodorus Henricus, 5708 HZ Helmond (NL)
(74) Representative: Jilderda, Anne Ayolt

(57) **Abstract**

A heat recovery device for use in a liquid conduit system, particularly in a sewer system, more particularly in a pressure sewer, comprises a carrying conduit (20) with therein a longitudinal space (15) for connection to a sewer and a heat exchanger device which provides for heat-exchanging contact between a primary heat-carrying medium in the longitudinal space, particularly a wastewater flow, and a secondary heat-carrying medium. The carrying conduit (20) is surrounded coaxially by an outer jacket (30), wherein the carrying conduit and the outer jacket maintain a mutual cavity (25) all the way around for carrying the secondary heat-carrying medium. A wall (21) of the carrying conduit (20) between the longitudinal space (15) and the cavity (25) provides for heat transfer from the primary heat-carrying medium in the longitudinal space (15) to the secondary heat-carrying medium in the cavity (25).

## Description

The present invention relates to a heat recovery device for use in a liquid conduit system, particularly in a sewer system, more particularly in a pressure sewer, comprising a carrying conduit with therein a longitudinal space for connection to the liquid conduit system, wherein the carrying conduit is surrounded coaxially by an outer jacket and therewith maintains a cavity for carrying a secondary heat-carrying medium in heat-exchanging contact with a primary heat-carrying medium in the longitudinal space, particularly a wastewater flow. The invention also relates to a transition device for connection of the heat recovery device in a liquid conduit system.

A relatively new way of recovering heat in a sustainable manner is aquathermia. Aquathermia is a collective name for recovery of the thermal energy from surface water (TEO), wastewater (TEA) and/or drinking water (TED). TEA is also referred to in popular speech as riothermia, wherein heat is recovered from the sewer.

The first use of aquathermia dates back to around 1938, in Switzerland. In this year the town hall of Zurich was connected to an aquathermia system which extracted heat from the river Limmat. Following on from the Swiss example, there were plans in 1946 in the Netherlands to investigate whether, as part of post-World War II reconstruction, parts of Amsterdam could be heated with heat from the canals. This investigation was never carried out because an enormous gas field was discovered near Slochteren in 1959, causing the Netherlands to switch to gas entirely for domestic heating and other uses.

Based on the climate goals set under the Paris Agreement, the Dutch government aims to reduce CO2 emissions by at least 55%, compared to 1995, by 2030, and even 95% by 2050. These climate goals make aquathermia a promising technology for recovering heat in CO2-neutral manner. The Paris Agreement estimates the expected heat demand for the built environment at 333 petajoule (PJ) in 2030. In an analysis for the Foundation for Applied Water Research (STOWA), CE Delft states that the economic potential of TEO amounts to 150 PJ, that of TEA to 56 PJ and that of TED to 4 to 6 PJ per year. Aquathermia can thereby provide more than half of the national heat demand.

This makes TEO and TEA very promising ways of applying heat sustainably. A lot of surface water, including in ditches, lakes and rivers, for recovering heat from is available in the Netherlands. A large amount of wastewater with residual heat is also available in sewer systems, for instance in sewers, particularly in sewer pressure conduits, in pumping stations and in wastewater purification plants (RWZls), from which heat can be extracted.

A known heat recovery device for recovering heat from wastewater is described in European patent application EP 2.703.572. In this known heat recovery device a heat exchanger device is inserted into the longitudinal space of a sewer so as to enter into heat-exchanging contact with the wastewater flow being carried through the sewer. The secondary heat-carrying medium is carried through the heat exchanger by means of a feed conduit and carrying conduit, which are coupled to the heat exchanger, and residual heat is thereby extracted from the wastewater flow.

A drawback of this known heat recovery device is that the active cross-section of the longitudinal space in the sewer is limited thereby. Not only is this detrimental to the carrying capacity of the sewer; the thus introduced obstacle more importantly creates an increased risk of waste accumulation and eventually blockage of the sewer.

Known from French patent application FR 2.909.113 is a heat recovery device wherein a heat exchanger is arranged around a sewer pipe. The heat exchanger comprises a conduit through which the second medium is carried and which spirals around the sewer pipe in the longitudinal direction thereof. The conduit lies enclosed between a set of metal tubes which enhance a heat transfer between the sewer pipe and the conduit and fix the conduit. The heat exchanger is surrounded by an insulating jacket of plastic which is formed from mutually coupled jacket parts. Provided therebetween in each case is an external bridge which connects the conduit of the one jacket part to that in the subsequent jacket part. This makes this known heat recovery device relatively laborious and vulnerable, while the energy efficiency thereof will be limited due to the limited volume of the pipework forming the heat exchanger.

Known from British patent application GB 2.428.468 is a heat recovery device of the type described in the preamble. This known recovery device comprises an internal cylinder which is surrounded coaxially by an external cylinder while enclosing an intermediate space which is sealed on both sides and is filled wholly with the heat-carrying medium. For this purpose the external cylinder comprises an inlet and an outlet for the heat-carrying medium. The internal cylinder comprises on opposite outer ends couplings for a seamless connection to the sewer and has for this purpose a diameter adapted thereto. Heat transfer from a wastewater flow to the heat-carrying medium in the intermediate space takes place via an outer wall of the internal cylinder. Although a good thermal transfer can be achieved thereby, this setup however has the drawback that the length of the device is limited in practical terms, likewise limiting a total output.

The present invention therefore has for its object, among others, to provide a heat recovery device which can for instance be implemented in an existing liquid conduit system and which obviates the above stated drawbacks to at least significant extent.

In order to achieve the stated object a heat recovery device of the type described in the preamble has the feature according to the invention that the carrying conduit comprises an axial system of mutually coupled carrying pipe parts, that the outer jacket comprises an axial system of mutually coupled outer jacket parts, that the cavity extends continuously between the system of carrying pipe parts and the system of outer jacket parts and is sealed leak-tightly at opposite outer ends, that a first of the outer jacket parts comprises an inlet into the cavity for the secondary medium, and that a second of the outer jacket parts comprises an outlet from the cavity for the secondary medium. The device can be connected to a further heat exchanger device, particularly a heat pump, by means of the feed and the carrying pipes. The further heat exchanger particularly forms part of a heating installation, the energy needed for which is thus supplied at least partially by the heat recovery device according to the invention.

The wall of the carrying pipe parts provides here for a thermodynamic transfer of heat from the primary heat-carrying medium in the longitudinal space to the secondary heat-carrying medium which is being carried through the cavity and thereby enters into contact with the wall. The active cross-section of the longitudinal space is thereby not limited at all and remains completely clear for the primary heat-carrying medium. Because both the carrying conduit and the outer jacket are constructed from successive segments which are connected to each other, the two can be assembled to a sufficiently great length on site. This great length is reflected in a correspondingly greater heat recovery capacity, whereby the device has sufficient output both thermodynamically and economically.

The heat recovery device according to the invention is particularly suitable for application in an existing or not yet existing liquid conduit system, but can for instance also be applied in a feed conduit or carrying conduit for a process liquid in order to extract heat therefrom. Recourse is here particularly and preferably had to a pressure conduit, an active cross-section of which is utilized, if not wholly, then at least largely by the primary medium. In that case the heat recovery device according to the invention allows heat to be extracted from the primary wastewater flow over the whole periphery of the carrying pipe. This puts the overall output of the heat recovery device according to the invention at an unprecedented level.

In order to be able to use or store the heat extracted from the primary heat-carrying medium in efficient manner a particular embodiment of the heat recovery device has the feature according to the invention that the inlet and the outlet are separated from each other by at least one further outer jacket part and that the inlet is provided downstream of the outlet, considering the primary medium. The device is here operated in counterflow over a greater distance, considering the flow directions of the primary and secondary medium. This results in a more uniform temperature difference (ΔT) between the two liquids, and thereby a more balanced heat transfer.

In respect of its construction, a preferred embodiment of the heat recovery device has the feature according to the invention that the carrying pipe parts are formed at least substantially from a material with a relatively high heat conduction coefficient, particularly from steel. A further preferred embodiment of the heat recovery device has the feature here according to the invention that the outer jacket parts are formed at least substantially from a material with a relatively low heat conduction coefficient, particularly from a plastic, more particularly from a (glass) fibre-reinforced plastic.

The relatively low heat conduction coefficient of the carrying pipe parts provides for a wall between the longitudinal space and the cavity with a low thermal resistance and thereby results in a good thermal contact between the primary heat-carrying medium and the secondary heat-carrying medium, this contributing significantly to the operational efficiency of the device. The relatively high heat conduction coefficient of the jacket parts provides for an insulating (outer) wall of the cavity and thereby limits thermal losses.

A further preferred embodiment of the heat recovery device according to the invention has the feature that spacers are provided between the carrying pipe parts and the outer jacket parts over a length of the cavity. The spacers are here provided such that a transport of the second medium through the cavity is thereby permitted longitudinally, but the outer jacket parts are held at a fixed distance from the carrying pipe parts in transverse direction. The spacers impose on the cavity an at least substantially constant cavity width all the way around and furthermore provide for turbulence of the second medium being guided through the cavity, this further enhancing the heat-exchanging contact with the wall of the carrying pipe parts.

A further preferred embodiment of the heat recovery device has the feature here according to the invention that the spacers protrude from an outer wall of the carrying conduit. The spacers thus also provide a practical aid in the construction of the device. This is because the outer jacket parts can in that case simply be slid over the spacers on the carrying conduit. The spacers provide here for a correct spacing and guiding for the outer jacket parts. The spacers can be connected fixedly to the outer wall of a carrying pipe part, for instance be adhered or welded thereto, but also form part of individual bands or rings which are slid over the carrying pipe part or otherwise mounted thereover. The material thereof is adapted thereto and, besides consisting of (preserved) steel, can also consist of a suitable plastic.

For a uniform distribution of the second medium over the cavity formed between the two conduits a further preferred embodiment of the heat recovery device has the feature according to the invention that the carrying conduit and the outer jacket are at least substantially of the same shape in cross-section. Both conduits are here particularly circular in cross-section. A further preferred embodiment of the heat recovery device therefore has the feature according to the invention that the carrying conduit and the outer jacket are both composed of successive, mutually connected pipe parts. This embodiment is not only advantageous from a practical viewpoint in that, when a matching diameter is opted for, the carrying pipe parts connect seamlessly to common conduits in existing sewer systems. Suitable pipe parts of steel or plastic in a range of sizes and materials are also readily commercially available, and can be coupled to each other in leak-tight manner to any desired length on site.

A further particular embodiment of the heat recovery device according to the invention has the feature that the carrying pipe parts are formed from steel and each comprise at opposite outer ends respectively a spigot end and a sleeve fitting thereover, that the spigot end takes at least partially a double-walled form, thus enclosing an air chamber, and that the pipe parts are welded together at the position of the air chamber. The carrying pipe parts are preferably provided internally with a thin coating or liner of plastic which protects the steel against corrosion and the formation of sludge on the inner wall, which could otherwise cause fouling and blockage to occur. By providing an air chamber at the position of the weld a thermal barrier is created between the weld and such a coating, this limiting a heat transfer to the coating. This protects the coating against the usually high temperature of the welding.

Use can be made of a sealing slide-on sleeve-spigot connection for a leak-tight mutual coupling of the outer jacket parts as well. The device advantageously has the advantage according to the invention that the outer jacket parts are formed from a plastic, particularly from a (glass) fibre-reinforced plastic. Such outer jacket parts can be mutually connected in leak-tight manner in various ways. This is done particularly by means of a surrounding collar or socket at the position of the connection, which seals in leak-tight manner, or by means of an intermediate sealing ring or adhesion.

The heat recovery device according to the invention is not only suitable for sewer systems to be newly constructed, but can instead also be readily implemented in an existing situation. For this purpose a part of an already present sewer conduit is removed and the heat recovery device according to the invention is arranged in its place. For the purpose of a functional coupling of the outer ends of the heat recovery device to the now opened outer ends of an existing sewer a further preferred embodiment of the heat recovery device has the feature according to the invention that the system of carrying pipe parts is connectable to the liquid conduit system at opposite outer ends via respectively a first transition device and a second transition device, that each of the transition devices comprises a space which is open on either side and which provides for open communication between the liquid conduit system and the longitudinal space in the carrying conduit, that each of the transition devices comprises a connection for a leak-tight coupling to an adjacent outer jacket part, and that each of the transition devices seals the cavity in leak-tight manner in situ.

The transition device thus provides on one hand for a leak-tight connection between the longitudinal space of the heat recovery device and the adjacent outer end of the liquid conduit system. On the other hand the transition device provides for a mounting and leak-tight seal of the outer jacket around the carrying conduit around which the cavity is formed. Herein, the cavity comes up against the transition device and ends there. In this respect a particular preferred embodiment of the heat recovery device has the feature according to the invention that at least one of the two transition devices and an adjacent outer jacket part are provided all around with a flanged edge at mutually facing outer ends and are thereby mutually connected in leak-tight manner, wherein the flanged edge of the at least one transition device also seals the cavity, and that the transition device connects to the sewer system at an opposite outer end.

A further particular preferred embodiment of the heat recovery device according to the invention has the feature that at least one of the two transition devices comprises a sealing device which is connected to an adjacent outer jacket part, that, just as the adjacent outer jacket part, the sealing device is in a first state axially adjustable relative to the carrying conduit, that the sealing device has a fixed second state in which the sealing device seals the cavity in leak-tight manner, and that the transition device connects at a free outer end to the sewer system. The axial adjustability of the sealing device here allows a final jacket part of the outer jacket to be kept removed from a previous jacket part over a corresponding distance. At the position of the thus created mutual separation a weld can then for instance be realized between carrying pipe parts. The adjacent outer ends of the outer jacket parts lie at a sufficient distance so as not to be affected by the heat of the welding. Afterwards, the outer jacket parts are brought together so as to be mutually coupled in leak-tight manner. The sealing device slides along here and can then be brought into the second state and seal the cavity in leak-tight manner.

With a view to a mechanical fixing of the heat recovery device thus implemented in a sewer a further preferred embodiment of the heat recovery device has the feature according to the invention that the transition devices provide fixing means which axially fix the outer jacket parts adjacent thereto.

The invention also relates to such a transition device as described above and will be further elucidated here with reference to an exemplary embodiment and an accompanying drawing. In the drawing:
- Figure 1: shows an exemplary embodiment of a heat recovery device according to the invention;
- Figure 2: shows a carrying pipe part as applied in the heat recovery device of figure 1;
- Figure 3: shows a cross-section of a mutual coupling of a first and a second carrying pipe part as applied in the heat recovery device of figure 1;
- Figure 3A: shows an enlarged detail of the coupling shown in figure 3;
- Figure 4: shows a cross-section of a mutual coupling of a first and a second outer jacket part as applied in the heat recovery device of figure 1;
- Figure 5: shows a first transition device as applied in the heat recovery device of figure 1;
- Figure 6: shows a second transition device as applied in the heat recovery device of figure 1;
- Figure 7: shows an enlarged detail of the first transition device of figure 5; and
- Figure 8: shows an enlarged detail of the second transition device of figure 6.

It is otherwise noted here that the figures are purely schematic and not always drawn to (the same) scale. Some dimensions in particular may be exaggerated to greater or lesser extent for the sake of clarity. Corresponding parts are designated in the figures with the same reference numeral.

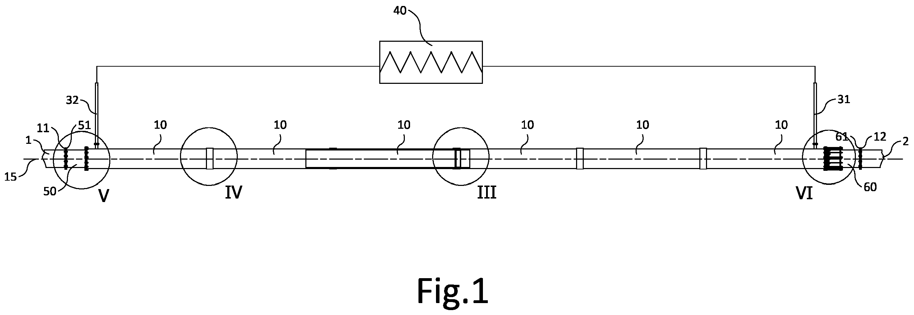

Figure 1 shows a setup of an embodiment of a heat recovery device according to the invention. The heat recovery device can particularly be implemented in an existing sewer system or a sewer system to be newly constructed, the outer ends 1, 2 of which are shown in the figure. The heat recovery device essentially comprises a carrying conduit as continuation of a discharge conduit in a sewer and an outer jacket which surrounds the carrying conduit, thus forming an intermediate cavity through which a secondary heat-carrying medium can be guided.

The heat recovery device is composed of segments, each with a length of about 6 metres. A heat recovery device of any desirable length can be realized hereby. The heat recovery device comprises a so-called double-tube heat exchanger. This consists of a carrying pipe with therearound an outer jacket, between which an annular cavity is created. This results in two separate spaces in which liquids can flow without coming into direct contact with each other. Such a double-tube heat exchanger has been found to be an ideal heat exchanger for riothermia. This is because the wastewater remains strictly separated from the secondary medium for heating.

In this example the carrying conduit is made from carbon steel. Carbon steel has the property of being very strong and also having a relatively high heat conduction coefficient. Carbon steel is thereby able to withstand the pressure in a pressure conduit and to readily transfer the heat from the wastewater to the medium for heating. This makes it an ideal material for the carrying pipe of the described riothermal heat recovery device to be implemented in a pressure sewer. A wastewater flow is therein forcibly discharged through the carrying pipe under pump pressure, this resulting in a higher degree of filling and thereby a heat transfer along a greater part of the periphery of the carrying pipe.

It is furthermore desirable for the recovered heat to remain trapped in the secondary medium until the heat is relinquished to a further heat exchanger, such as for instance a heat pump. In order not to relinquish heat to the surrounding area, or hardly so, an outer jacket of thermally insulating plastic, in this example a glass fibre-reinforced plastic (GRP), is therefore opted for. This material is likewise strong and can consequently be heavily mechanically loaded but, in contrast to carbon steel, conversely has a very low heat conduction coefficient. Hereby, GRP has a good thermally insulating effect. The table below shows the most important material properties of the materials used here:

| | Steel | GRP | |
|---|---|---|---|
| Wall roughness | 0.046 | 0.01-0.016 | |
| Compression class | | 10 | PN (Bar) |
| Stiffness class | | 5000 | SN (N/mm²) |
| Heat conduction | 50 | 0.25 | W/mK |

The heat recovery device can be operated in two modes; a parallel-flow mode and a counter-flow mode. The configuration has a significant impact on the final heat transfer. The temperature difference between the two mediums is here one of the most significant parameters in respect of heat transfer. It is desirable for this temperature difference to remain as high as possible along the length of the heat exchanger. For this reason, it has been opted to connect the heat exchanger in a counter-flow configuration.

For an optimal heat transfer the available contact surface between the carrying conduit and the cavity is preferably fully utilized. The heat recovery device is therefore preferably connected in a pressure sewer in which a pressure conduit will be wholly filled at all times. The heat recovery device is therefore advantageously installed adjacent to a pumping station which provides for the pressure build-up in the sewer. The heat recovery device preferably has a length of at least 30 metres in order to achieve a sufficiently cost-effective riothermal efficiency.

According to the invention, the carrying conduit and the outer jacket are both formed by a system of pipe segments 10 coupled to each other in leak-tight manner and having a space 15 running continuously therein longitudinally for unimpeded (through)feed of a wastewater flow from the sewer system, also referred to hereinafter as the primary heat-carrying medium. This continuation of the active cross-section of the original sewer is represented in the figure by the central axis indicated therein.

The pipe segments 10 typically have a diameter in the order of several tens of centimetres to several metres. In this example a diameter in the order of 80 centimetres, which is adapted to the corresponding dimension of the two outer ends 1, 2 of the existing sewer, is opted for for the carrying conduit. Each of the pipe segments 10 is double-walled, wherein the carrying pipe 20 is surrounded coaxially and concentrically by an outer jacket 30. The carrying pipe 20 and the outer jacket 30 maintain a mutual cavity 25 for carrying a secondary heat-carrying medium which is guided externally over a further heat exchanger 40, particularly a heat pump. Just as the longitudinal space 15, the cavity in the heat recovery device according to the invention also extends continuously in the successive segments 10.

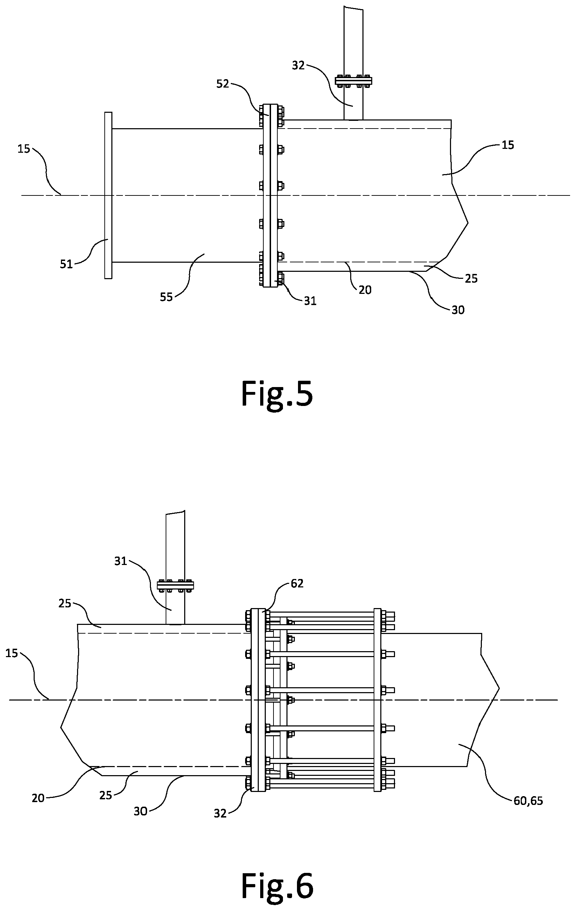

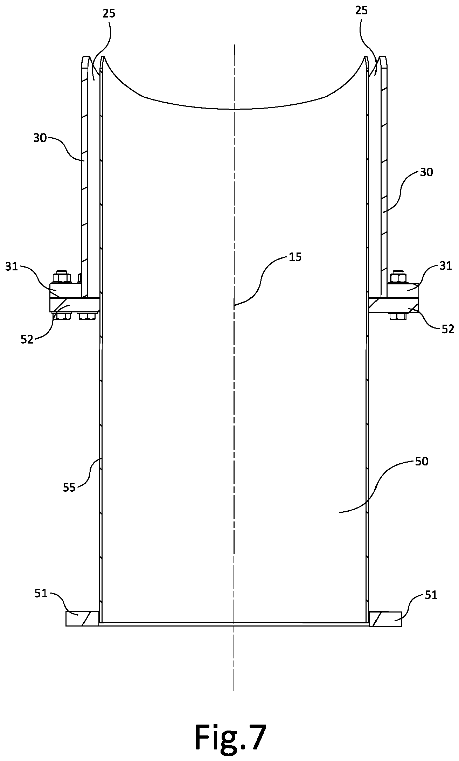

For transport of the secondary heat-carrying medium the heat recovery device comprises a feed 31 and a discharge 32 which are in open communication with cavity 25. The secondary medium is kept in circulation in counterflow relative to the wastewater flow through the sewer by means of a pump device (not shown). With interposing of a first transition device 50 and a second transition device 60 the heat recovery device can be coupled in reliable and leak-tight manner to the outer ends 1, 2 of an existing sewer or a sewer to be newly constructed. The two transition devices are shown enlarged in figures 6 and 7 and will be elucidated still further below.

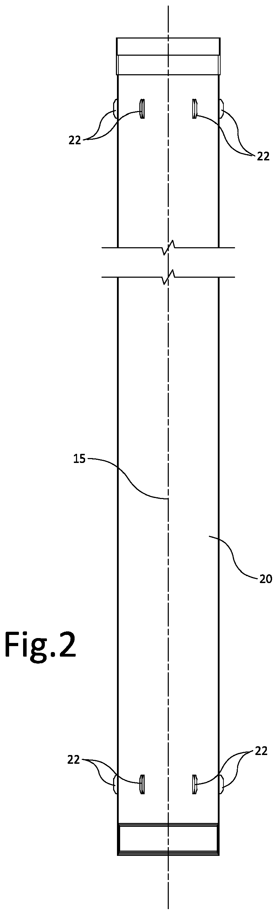

The carrying pipe 20 of the heat recovery device comprises a system of mutually coupled steel carrying pipe parts, one of which is shown in figure 2. Internally, each carrying pipe part 20 comprises a continuation of the longitudinal space 15 and thereby a continuation of the passage and active cross-section in the sewer 1, 2 with which the carrying pipe 20 is in open communication. Externally, a number of spacers 22 is welded onto the steel wall 21 of each carrying pipe part 20, which spacers ultimately define a cavity width between the carrying pipe 20 and an outer jacket 30 to be placed thereover. The secondary medium can flow freely between the spacers 22 so that the transport of the secondary heat-carrying medium is not impeded thereby such as to cause problems. On the contrary, the turbulence caused thereby will contribute to a heat transfer from the primary medium.

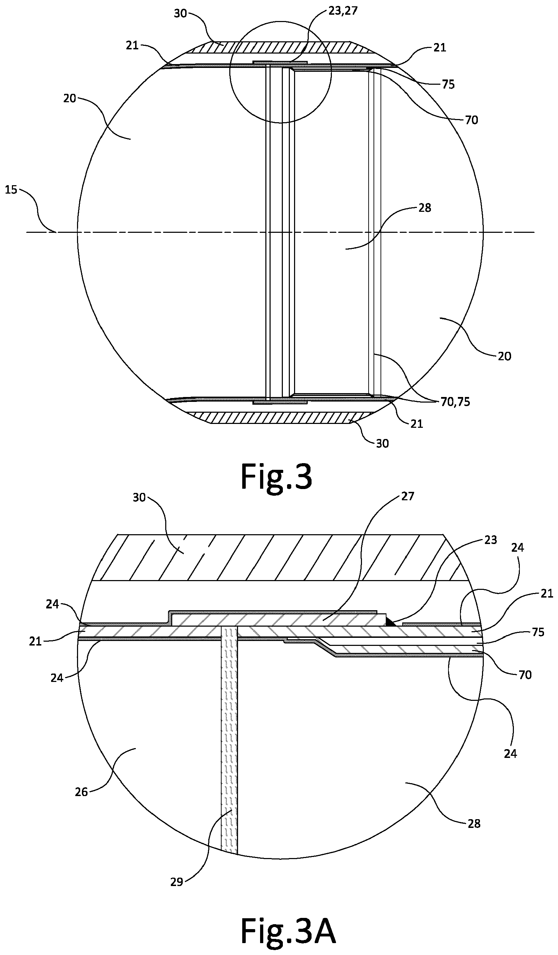

The carrying pipe parts 20 are provided both externally and internally with a polymer coating 24 which protects the steel wall 21 against corrosion and counteracts accretion of sludge or the like thereon, see also figure 3A. For relatively acidic environments with an acidity level of between pH = 1 and pH = 8 a so-called green series coating with a thickness in the order of 180 micron is opted for here. This has a heat conduction coefficient of 0.35 W/mK and can withstand temperatures of -20°C to 180°C. For more alkaline environments with an acidity level of between pH = 4 and pH = 13 use is however preferably made of a so-called red series coating with a thickness in the order of 200 micron. This has a heat conduction coefficient of 0.51 W/mK and can withstand temperatures of -120°C to 180°C.

For the purpose of a mutual coupling, each carrying pipe part 20 comprises at one of the outer ends 26 thereof a welded-on sleeve 27 which falls over an opposite spigot end 28 of the adjacent pipe part, see figure 3 and figure 3A. An elastomer sealing ring 29 between the two carrying pipe parts 26, 28 provides for a reliable seal and connection. For the purpose of a firm connection, the welded-on sleeve 27 of the carrying end of the one carrying pipe part is welded onto the spigot end 28 of the subsequent carrying pipe part. This weld 23 is arranged manually on site, and this process is repeated between each set of pipe parts in order to thus bridge a desired length between the two outer ends 1, 2 of the sewer.

In order to prevent the internal polymer coating 24 of carrying pipe 20 from being affected at the position of the weld 23 as a result of the inevitable heating during welding the spigot end 28 of the subsequent pipe part takes a double-walled form locally. For this purpose the wall 21 of the subsequent carrying pipe part 20 is provided internally, in the spigot end 28 thereof, with a thermal barrier in the form of a steel socket 70 which maintains an air gap 75 to the wall 21 of pipe part 20. Socket 70 is welded in spigot end 28 and polymer coating 24 runs thereover. The air gap 75 provides sufficient thermal insulation to protect coating 24 from the weld 23 to be arranged on site.

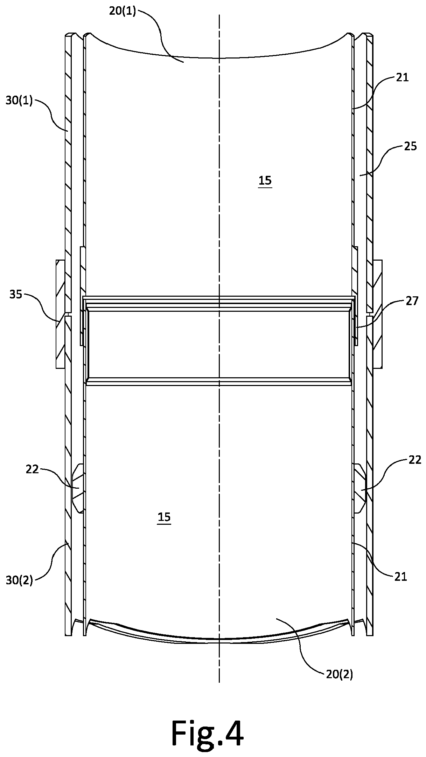

As soon as a first carrying pipe part 20(1) and a second carrying pipe part 20(2) are welded together in the manner stated above, a subsequent outer jacket part 30(2) can be slid over the welded-on sleeve 23, 27, see figure 4. For the outer jacket parts use is made of a thick-walled, impact-resistant plastic, preferably a glass fibre-reinforced plastic, as in this example. The spacers 22 automatically centre each outer jacket part 30(2) relative to a carrying pipe part 20(2). Each subsequent outer jacket part 30(2) is pushed at least substantially up against the previous outer jacket part 30(1), after which a connecting socket, this also forming a reliable liquid barrier, is arranged externally round both outer jacket parts 30(1,2) at the position of the contact surface. It is important that the cavity 25 between carrying pipe 20 and outer jacket 30 continues at the position of the couplings of the carrying pipe parts and the connections of the outer jacket parts, and is not interrupted. The local narrowed portion caused by the adapted sleeve 27 has been found in practice not to be detrimental to the throughflow of cavity 25.

The heat recovery device is provided at an inlet with a first transition device, see figure 1 and figure 5. The transition device 50 comprises here a steel carrying pipe part 55 having at a free outer end a steel flange 51 for a leak-tight connection to a corresponding flange 11 which was provided at the outer end 1 of the sewer. At an opposite outer end the transition device comprises a collar 52 which is welded onto carrying pipe part 55 all around. This collar 52 provides a mounting base for the outer jacket 30. The first outer jacket part 30 is for this purpose provided at the outer end with a flange 31 which is mounted on collar 52 in leak-tight manner all around by means of a series of bolts and nuts. The same collar 52 furthermore forms a leak-tight outer end and seal of the cavity 25 between carrying pipe parts 10 of the device and outer jacket 30, see also figure 6.

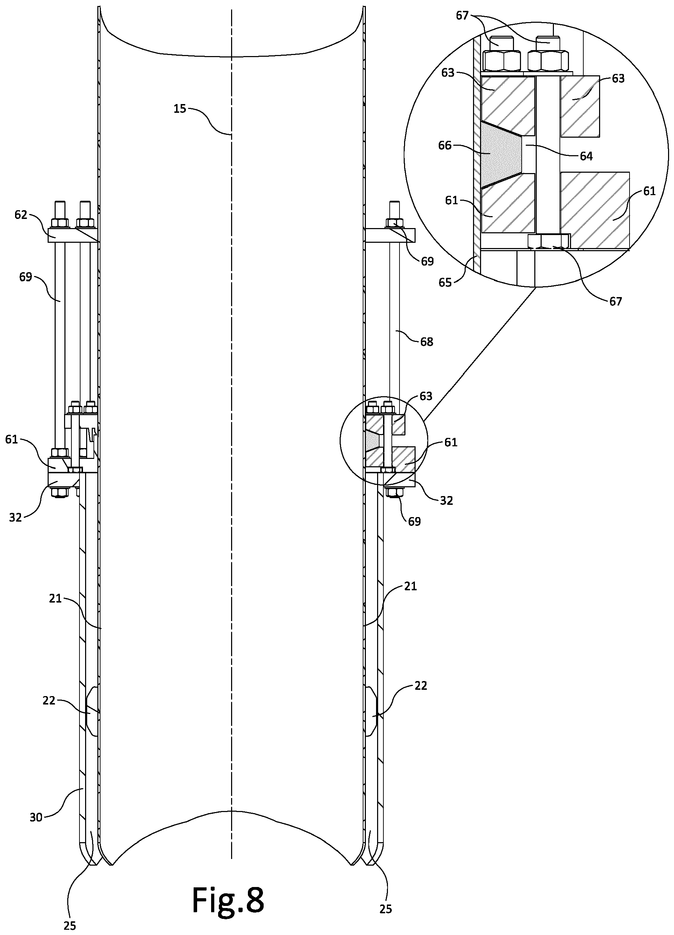

At its outlet the heat recovery device comprises the second transition device 60 shown in figure 2 and figure 8, see also figure 1. Just as the first transition device 50, this transition device 60 comprises a steel pipe part 65 which forms part of the carrying conduit as unimpeded continuation of the longitudinal space 15. The pipe part 65 comprises at a free outer end a steel flange 61 for leak-tight connection to a corresponding flange 12 which was provided at the outer end 2 of the sewer. Also provided is a steel collar 62 which provides a mounting base for the outer jacket 30, see also figure 7. The last outer jacket part 30 is for this purpose provided at the outer end with a flange 32 which is mounted on collar 62 in leak-tight manner all around by means of a series of bolts and nuts.

In contrast to the first transition device, collar 61 of the second transition device is not welded onto the wall 21 of pipe part 65 but is initially still freely movable thereover. The last outer jacket part 30 is thus axially displaceable over carrying pipe 65 together with the collar 61. This displacement is bounded by a second collar 62 in transition device 60 which is connected tightly to pipe part 65, this in contrast to the first collar 61. For this purpose use is made for the second collar 62 of a steel rim or flange which is welded onto the wall of the steel pipe part 65 all the way around.

In an extreme position, wherein the two collars 61, 62 are in mutual contact, this provides sufficient working space for realizing the final weld between the last and penultimate carrying pipe part 10 of the heat recovery device. In the opposite extreme position shown in figure 8 the last outer jacket part 30 slides over the weld and the last and penultimate outer jacket part 30 come into contact with each other and are connected in the manner described above.

In order to seal cavity 25 in leak-tight manner the second transition device 60 provides a sealing device which is axially movable over pipe part 65 in a first state in order to allow the above described axial displacement. The sealing device comprises a steel clamping ring 63 adjacently of the collar 61, which defines a narrowing cavity 64 relative to collar 61. Clamping ring 63 can be tightened relative to collar 61 by means of a set of bolts and nuts 67. Lying enclosed in cavity 64 is an elastomer sealing ring 66 which, when clamping ring 63 is tightened, is driven out of the cavity 64 and finally seals onto the outer wall of pipe part 65 in leak-tight manner. This seal seals cavity 25 in leak-tight manner. The clamping of sealing ring 66 onto pipe part 65 already causes collar 61 and clamping device 63, 66 to no longer be axially movable relative to pipe part 65. Nevertheless, for safety, collar 61 is also firmly mechanically fixed by means of a set of bolts or threaded ends 68 and nuts 69 which connect and thus permanently fix the collar and sealing device to the second collar 62.

In the manner indicated above the heat recovery device can be implemented seamlessly in both existing liquid conduit systems and liquid conduit systems to be newly constructed, such as (pressure) sewer systems in particular. Once installed, a heat-carrying medium is pumped through the cavity 25 counter to the direction of flow of the liquid flow in the primary carrying pipe. Owing to the high heat conduction coefficient of its material, the steel wall of carrying pipe 10 provides for excellent heat transfer from the liquid flow to the secondary medium being circulated over an external consumer or further heat exchanger 40 in order to relinquish the thus absorbed heat thereto. Owing to the relatively low heat conduction coefficient of its material, the thick-walled plastic jacket of the GRP outer jacket provides an excellent thermal insulation and separation of the surrounding area (ground), so that none or hardly any of this heat is lost.

Although the invention has been further elucidated above on the basis of only several exemplary embodiments, it will be apparent that the invention is by no means limited thereto. On the contrary, many variations and embodiments are still possible within the scope of the invention for a person with ordinary skill in the art. Instead of steel spacers, it is thus also possible to use plastic spacers between the carrying conduit and the outer jacket, wherein the spacers are for instance formed by rings or rims which are slid over the carrying pipe. The materials used are also given by way of example only, and other plastics can also be used, particularly in respect of the outer jacket. Other connecting techniques are also suitable for mutual connection of successive pipe parts, without having an adverse effect on the practical applicability and the advantages of the heat recovery device. Finally, the heat recovery device according to the invention is applicable not only in a sewer system for a wastewater flow, but can conversely be utilized more broadly in hydraulic systems, such as for instance also a drinking water provision.

## Claims

1. Heat recovery device for use in a liquid conduit system, particularly in a sewer system, more particularly in a pressure sewer, comprising a carrying conduit with therein a longitudinal space for connection to the sewer system, wherein the carrying conduit is surrounded coaxially by an outer jacket and therewith maintains a cavity for carrying a secondary heat-carrying medium in heat-exchanging contact with a primary heat-carrying medium in the longitudinal space, particularly a wastewater flow, **characterized in that** the carrying conduit comprises an axial system of mutually coupled carrying pipe parts, that the outer jacket comprises an axial system of mutually coupled outer jacket parts, that the cavity extends continuously between the system of carrying pipe parts and the system of outer jacket parts and is sealed leak-tightly at opposite outer ends, that a first of the outer jacket parts comprises an inlet into the cavity for the secondary medium, and that a second of the outer jacket parts comprises an outlet from the cavity for the secondary medium.

2. Heat recovery device according to claim 1, **characterized in that** the inlet and the outlet are separated from each other by at least one further outer jacket part and that the inlet is provided downstream of the outlet, considering the primary medium.

3. Heat recovery device according to claim 1 or 2, **characterized in that** the carrying pipe parts are formed at least substantially from a material with a relatively high heat conduction coefficient, particularly from steel.

4. Heat recovery device according to claim 1, 2 or 3, **characterized in that** the outer jacket parts are formed at least substantially from a material with a relatively low heat conduction coefficient, particularly from a plastic, more particularly from a (glass) fibre-reinforced plastic.

5. Heat recovery device according to claim 1, 2 or 3, **characterized in that** provided in the cavity between the carrying pipe parts and the outer jacket parts is a number of spacers which impose on the cavity an at least substantially constant cavity width.

6. Heat recovery device according to claim 5, **characterized in that** the spacers support on an outer wall of the carrying pipe parts.

7. Heat recovery device according to one or more of the preceding claims, **characterized in that** the carrying conduit and the outer jacket are at least substantially of the same shape in cross-section.

8. Heat recovery device according to claim 7, **characterized in that** the carrying pipe parts are formed from steel and each comprise at opposite outer ends respectively a spigot end and a sleeve fitting thereover, that the spigot end takes at least partially a double-walled form, thus enclosing an air chamber, and that the pipe parts are welded together at the position of the air chamber.

9. Heat recovery device according to claim 7 or 8, **characterized in that** the outer jacket parts are formed from a plastic, particularly from a (glass) fibre-reinforced plastic.

10. Heat recovery device according to one or more of the preceding claims, **characterized in that** the system of carrying pipe parts is connectable to the sewer system at opposite outer ends via respectively a first transition device and a second transition device, that each of the transition devices comprises a space which is open on either side and which provides for open communication between the sewer system and the longitudinal space in the carrying conduit, that each of the transition devices comprises a connection for a leak-tight coupling to an adjacent outer jacket part, and that each of the transition devices seals the cavity in leak-tight manner in situ.

11. Heat recovery device according to claim 10, **characterized in that** at least one of the two transition devices and an adjacent outer jacket part are provided all around with a flanged edge at mutually facing outer ends and are thereby mutually connected in leak-tight manner, wherein the flanged edge of the at least one transition device also seals the cavity, and that the transition device connects to the sewer system at an opposite outer end.

12. Heat recovery device according to claim 10 or 11, **characterized in that** at least one of the two transition devices comprises a sealing device which is connected to an adjacent outer jacket part, that, just as the adjacent outer jacket part, the sealing device is in a first state axially adjustable relative to the carrying conduit, that the sealing device has a fixed second state in which the sealing device seals the cavity in leak-tight manner, and that the transition device connects at a free outer end to the sewer system.

13. Heat recovery device according to claim 10, 11 or 12, **characterized in that** the transition devices provide fixing means which axially fix the outer jacket parts adjacent thereto.

14. Transition device as applied in the heat recovery device according to one or more of the claims 10-13.
